# EUROPEAN PATENT APPLICATION

(11) **EP 2 051 313 A1**
(43) Date of publication of application: **22.04.2009**
(21) Application number: 07792243.3
(22) Date of filing: 09.08.2007
(51) Int. Cl.: H01M 2/02

(54) **BATTERY CAN AND BATTERY USING THE SAME**

(30) Priority: 09.08.2006 JP 2006216776
(71) Applicant: Panasonic Corporation, Kadoma-shi Osaka 571-8501 (JP)
(72) Inventor: MORI, Katsuhiko, Chuo-ku, Osaka City 540-6207 (JP); SAKASHITA, Fumiharu, Chuo-ku, Osaka City 540-6207 (JP); SANO, Hideki, Chuo-ku, Osaka City 540-6207 (JP)
(74) Representative: Haley, Stephen
(86) International application number: PCT/JP2007/065591
(87) International publication number: WO 2008/018532

(57) **Abstract**

An Fe-Ni diffusion layer (3) is formed on the surface of a steel plate (2) containing Fe in an amount of 98 percent by weight or more, and the Fe/Ni ratio is adjusted within the range of 0.1 to 2.5. The steel plate (2) is shaped into a battery case (1) having a predetermined shape with predetermined dimensions such that the Fe-Ni diffusion layer (3) serves as the inner surface of the battery case (1). When a battery is produced using the battery case (1), corrosion due to over-discharge is suppressed even when the amount of Ni used is small. Therefore, the produced battery is excellent in leakage resistance.

## Description

### TECHNICAL FIELD

The present invention relates to a battery case suitable for producing aqueous batteries such as alkaline dry batteries and nickel metal hydride rechargeable batteries and non-aqueous batteries such as lithium-ion rechargeable batteries and to a battery using the same.

### BACKGROUND ART

With the increasing diversification and functionality of portable electronic devices, there is a demand for batteries used as power sources of such devices to have high capacity, high performance, and improved reliability. A highly corrosive electrolyte is used in many batteries. For example, a strong alkaline electrolyte is used in alkaline dry batteries. Therefore, to prevent electrolyte leakage caused by corrosion of the battery case by the electrolyte, a corrosion-resistant layer must be formed on the inner surface of the base material of the battery case. In particular, suppose the case where iron (hereinafter Fe) is used as a base material for forming a battery case and the battery voltage drops as over-discharge proceeds. In this case, when the potential of the battery case reaches its corrosion potential, a corrosion current flows to cause the dissolution of Fe into the electrolyte. As the dissolution of Fe proceeds, a hole may be formed in the battery case to cause leakage of the electrolyte.

To address this problem, a battery case using an Fe base material has been proposed in which the corrosion resistance is improved by plating the surface of the Fe base material with nickel (hereinafter Ni) to increase the corrosion potential.

In one known conventional technology of a battery case having a corrosion-resistant layer on a base material, a Ni-plated steel plate is used for a battery case of alkaline manganese batteries (see Patent Document 1). The Ni-plated steel has an Fe-Ni diffusion layer which is formed on a surface of a steel plate serving as an Fe base material, the surface serving as an inner surface of the battery case, and which contains Ni deposited on the surface in an amount of 1 to 9 g/m², and a large number of crack-like dents are formed on the surface of the Fe-Ni diffusion layer.

In the above Ni-plated steel plate, the Fe-Ni diffusion layer having a large number of crack-like dens on the surface thereof is formed by Ni-plating followed by heat treatment. Even when such a Ni-plated steel plate having crack-like dents on the surface thereof is subjected to press working for forming a battery case, the crack-like dents are maintained, or part of the dents are elongated and enlarged. Therefore, with such a Ni-plated steel plate, a battery case having a high electrochemical potential is obtained.

In another known battery case, to obtain necessary and sufficient corrosion resistance at low cost, a steel plate containing carbon in an amount of 0.004 percent by weight or less is used as a base material (see Patent Document 2). The steel plate has a 0.5 to 3 µm thick Ni layer formed on a surface thereof serving as an inner surface of the battery case with a 0.5 to 3 µm Fe-Ni alloy layer interposed therebetween. Alternatively, the steel plate has a 0.5 to 3 µm thick Ni layer formed on the surface serving as the inner surface of the battery case with a 0.5 to 3 µm Fe-Ni alloy layer interposed therebetween. The steel plate further has a 0.5 to 3 µm Ni-s layer (a glossy Ni plating layer) formed on the Ni layer.

In the above configuration, the use of the steel plate containing carbon in an amount of 0.004 percent by weight or less provides high corrosion resistance and reduces the time for heat treatment. The formation of the Ni plating layer on the surface of the steel plate is effective for improving the corrosion resistance. Generally, a plating layer has a large number of pinholes. Therefore, after the Ni plating layer is formed on the surface of the steel plate, heat treatment is performed to generate the Fe-Ni alloy layer. In this manner, the number of pinholes is reduced, and the plating layer is prevented from flaking off. Moreover, by forming the glossy Ni plating layer on the Ni plating layer, the corrosion resistance is improved, and a smooth surface with a reduced number of pinholes is simultaneously obtained. Therefore, it is said that the slidability when an electrode plate assembly is inserted into the battery case would be improved.
[Patent Document 1] Japanese Patent Application Laid-Open No. 2001-345080.
[Patent Document 2] Japanese Patent Application Laid-Open No. 2005-078894.

### DISCLOSURE OF THE INVENTION

### PROBLEMS TO BE SOLVED BY THE INVENTION

However, even when the Fe-Ni diffusion layer is formed as in the above conventional technology, the dissolution of Fe may proceed locally when pinholes are formed on the Ni layer. The local dissolution of Fe may cause the pinhole-like holes to reach the outer surface of the battery case and to penetrate the battery case. In such a case, the electrolyte leaks through the formed holes, and the leak resistance is impaired.

Manufacturing processes of a battery case and a battery using the same always include a step of drawing and bending a sheet material. In such a working step, there is a high risk of formation of cracks and exfoliations in the Ni plating layer formed on the surface of the sheet material.

Moreover, the amount of Ni used increases more than is necessary. The price of Ni is increasing due to the increase in its demand. Therefore, unfortunately, it is difficult to reduce the manufacturing cost of a battery using a large amount of Ni.

It is an object of the present invention to provide a battery case in which the formation state of an Fe-Ni diffusion layer is maintained so that the dissolution of Fe is prevented from proceeding locally and to provide a battery using the same.

### MEANS FOR SOLVING THE PROBLEMS

According to a first aspect of the present invention in order to achieve the above object, there is provided a battery case comprising a base material including a steel plate and an Fe-Ni diffusion layer formed on one surface of the steel plate, the battery case being formed by shaping the base material into a closed-end tubular shape with predetermined dimensions such that the one surface faces inward, wherein the Fe-Ni diffusion layer is formed such that an Fe/Ni ratio is 0.1 to 2.5 at a depth giving a maximum of a Ni intensity when the Fe-Ni diffusion layer is subjected to glow discharge optical emission spectroscopic analysis to measure the Ni intensity and an Fe intensity in a depth direction, the Fe/Ni ratio being a ratio of the Fe intensity to the maximum value of the Ni intensity.

In the above configuration, the temperature and time of heat treatment for forming the Fe-Ni diffusion layer and also the thickness of Ni deposited by plating for forming the Fe-Ni diffusion layer are controlled so that the Fe/Ni ratio in the Fe-Ni diffusion layer falls within a predetermined range. Therefore, pinholes are less likely to be formed in the Ni layer in the inner surface of the battery case that is in contact with the electrolyte. Moreover, cracks and exfoliations are not formed in the plating layer by drawing and bending used in a process for forming the base material into the battery case and a process for producing a battery using the battery case. Since pinholes, cracks, and the like are not formed, the dissolution of Fe does not occur locally. Even when the dissolution of Fe is caused by over-discharge, the dissolution gradually proceeds in a global manner so that the formation of a through hole in the battery case caused by the dissolution of Fe can be prevented. Therefore, a battery case excellent in leakage resistance and containing a reduced amount of Ni used can be provided.

Preferably, in the above configuration, the Fe-Ni diffusion layer is formed to have a thickness of 0.1 µm to 4.0 µm. Preferably, the steel plate contains Fe in an amount of 98 percent by weight or more. With this configuration, the resistance to corrosion due to over-discharge can be improved.

According to a second aspect of the present invention, there is provided a battery comprising a battery case including a base material, the base material including a steel plate, a Ni layer formed on one surface of the steel plate, and an Fe-Ni diffusion layer formed in a junction region of the steel plate and the Ni layer, the battery case being formed by shaping the base material into a closed-end tubular shape with predetermined dimensions such that the one surface faces inward, wherein: the steel plate of the base material contains Fe in an amount of 98 percent by weight or more; the Fe-Ni diffusion layer is formed such that an Fe/Ni ratio is 0.1 to 2.5 at a depth giving a maximum value of a Ni intensity when the Fe-Ni diffusion layer is subjected to glow discharge optical emission spectroscopic analysis to measure the Ni intensity and an Fe intensity in a depth direction, the Fe/Ni ratio being a ratio of the Fe intensity to the maximum value of the Ni intensity; and the battery case formed by shaping the base material into the predetermined shape with the predetermined dimensions is allowed to contain a power generation element therein, the battery case having an opening that is closed to seal an inner portion of the battery case.

In the above configuration, the inner surface of the battery case that is in contact with the electrolyte is covered with the Fe-Ni diffusion layer having the Fe/Ni ratio adjusted to fall within a predetermined range. Therefore, pinholes are less likely to be formed in the Ni layer, and cracks and exfoliations are not formed in the plating layer by drawing and bending used in a process for forming the base material into the battery case and producing the battery using the battery case. Since pinholes, cracks, and the like are not formed, the dissolution of Fe does not occur locally. Even when the battery is brought into an over-discharge state to cause the dissolution of Fe to occur, the dissolution gradually proceeds in a global manner so that the formation of a through hole in the battery case caused by the dissolution of Fe can be prevented. Therefore, a battery case excellent in leakage resistance and containing a reduced amount of Ni used can be provided.

The battery configured as above is suitable for an alkaline battery and an alkaline rechargeable battery. The alkaline battery includes a power generation element contained in the battery case, and the power generation element is composed of a positive electrode including, as an active material, at least one of manganese dioxide and oxy nickel hydroxide, a zinc negative electrode, a separator interposed therebetween, and an alkaline electrolyte with which the power generation element is filled. The alkaline rechargeable battery includes a power generation element contained in the battery case, and the power generation element is composed of a positive electrode including nickel hydroxide as an active material, a negative electrode, a separator interposed therebetween, and an alkaline electrolyte with which the power generation element is filled. In each of these batteries, a highly corrosive strong alkaline electrolyte is used. However, the configuration of the battery case allows a battery excellent in leakage resistance to be produced at low cost.

The battery is also suitable for a non-aqueous electrolyte rechargeable battery. The non-aqueous electrolyte rechargeable battery includes a power generation element contained in the battery case, and the power generation element is composed of a positive electrode, a negative electrode, a separator interposed therebetween, and a non-aqueous electrolyte with which the power generation element is filled. Since the electromotive force generated by the non-aqueous electrolyte rechargeable battery is high, the influence of corrosion due to over-discharge increases. However, since the occurrence of local dissolution of Fe is suppressed, the formation of hole in the battery case due to corrosion is retarded, and the leakage resistance can thereby be improved.

### BRIEF DESCRIPTION OF THE DRAWINGS

Figs. 1A and 1B show the configuration of a battery case according to one embodiment of the present invention, Fig. 1A being a cross-sectional view thereof and Fig. 1B being a partial enlarged cross-sectional view, and Fig. 1C is a partial cross-sectional view of a battery case according to a conventional technology.
Fig. 2 is a graph showing an Fe/Ni ratio measured by glow discharge optical emission spectroscopy.
Fig. 3 is a diagram illustrating a method for producing a battery case using a DI method.
Figs. 4A and 4B illustrate a battery case working process for producing a battery, Fig. 4A being a cross-sectional view of a battery case having a groove formed therein, and Fig. 4B being a half cross-sectional view of a completed battery.

### BEST MODE FOR CARRYING OUT THE INVENTION

Hereinafter, best embodiments of the present invention will be described with reference to the drawings.

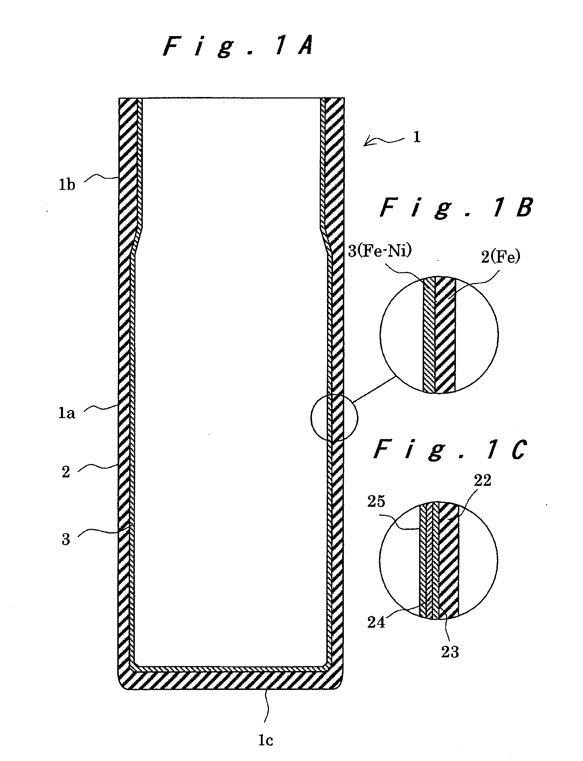

Fig. 1A shows a vertical cross-sectional view of a battery case 1 according to an embodiment. The battery case 1 has a closed-end cylindrical shape and is formed such that a sealing section 1b on the opening end side of a side circumferential portion 1a and a bottom section 1c have respective thicknesses greater than the thickness of the side circumferential portion 1a. As shown in Fig. 1B, an Fe-Ni diffusion layer 3 is formed on the inner surface of the battery case 1, i.e., on the surface of a steel plate 2.

Preferably, the steel plate 2 used for producing the battery case 1 contains Fe in an amount of 98 percent by weight or more. The steel plate 2 contains, in addition to Fe, trace amounts of components such as C (carbon), Si (silicon), Mn (manganese), N (nitrogen), P (phosphorus), Al (aluminum), Ni (Nickel), and Cr (chromium). In the present embodiment, a plurality of steel plates containing Fe in an amount of 84 percent by weight to 99 percent by weight and having a thickness of 0.3 mm were prepared for comparison studies described later.

Each of the prepared steel plates was subjected to heat treatment at a temperature of 600 to 800°C for 5 to 20 hours. Subsequently, a Ni plating layer having a thickness of 0.2 to 1.5 µm was formed on a surface to be located on the inner side of a battery case formed by shaping the heat-treated steel plate. Then, a Ni plating layer having a thickness of 1.5 to 3.5 µm was formed on a surface to be located on the outer side of the battery case.

The obtained plated steel plate was subjected to heat treatment at a temperature of 500 to 650°C for 1 to 20 hours to form the Fe-Ni diffusion layer 3. The Fe-Ni diffusion layer 3 is formed by diffusion of Ni atoms in the Fe layer during the heat treatment. Preferably, the thickness of the Fe-Ni diffusion layer 3 falls within the range of 0.1 to 4.0 µm. In the present embodiment, the thickness of the Fe-Ni diffusion layer 3 is about 1.5 µm.

The thickness of the Fe-Ni diffusion layer 3 was measured using a glow discharge optical emission spectrometer (GDA750, Rigaku Corporation). In the glow discharge optical emission spectroscopy, the surface of the steel plate 2 having the Fe-Ni diffusion layer 3 formed thereon is bombarded with argon ions generated by glow discharge, and the sputtered elements of the Fe-Ni diffusion layer 3 are analyzed. In this manner, the depth profiles of the elements distributed in the depth direction of the steel plate 2 having the Fe-Ni diffusion layer 3 formed thereon can be determined.

The thickness of the Fe-Ni diffusion layer is defined as the thickness from a depth at which the Fe GDS intensity shows 10% of the maximum Fe GDS intensity to a depth at which the Ni GDS intensity shows 10% of the maximum Ni GDS intensity.

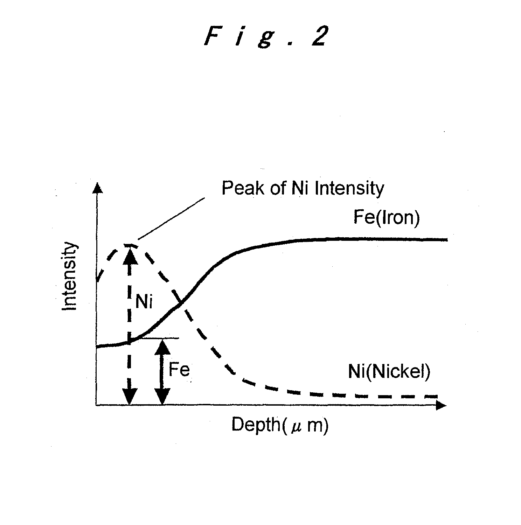

Specifically, as shown in Fig. 2, the steel plate 2 having the Fe-Ni diffusion layer 3 formed thereon was subjected to glow discharge optical emission spectrometric analysis to measure the distribution amounts of Ni and Fe in the steel plate 2 at different depths. Then, the ratio Fe/Ni that is the ratio of the measured Fe intensity at a depth at which the measured Ni intensity reaches a peak was determined. For comparison studies, a plurality of steel plates 2 having different Fe-Ni diffusion layers 3 with different Fe/Ni ratios were produced by changing heat treatment temperature and time and the thickness of the Ni plating layer.

Battery cases 1 were produced using the steel plates 2 having the above-configured Fe-Ni diffusion layers 3 formed thereon such that the surfaces having the Fe-Ni diffusion layers 3 formed thereon are located on the inner side.

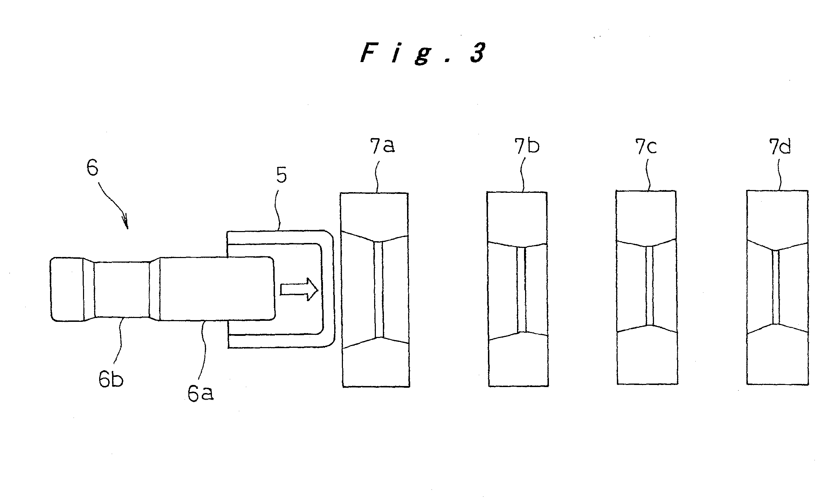

Each battery case 1 is produced as follows. First, as shown in Fig. 3, a steel plate 2 having an Fe-Ni diffusion layer 3 formed on a surface thereof is fed to a pressing machine to stamp the plate into a predetermined shape. Subsequently, a cup-shaped preliminary case 5 is produced by drawing the stamped steel plate 2 such that the surface having the Fe-Ni diffusion layer 3 formed thereon is located on the inner side. Next, the preliminary case 5 is shaped into a closed-end tubular shape with predetermined dimensions by the DI (Drawing and Ironing) method.

In general, the DI method includes drawing and ironing processes to form the preliminary case 5 into a closed-end tubular shape with predetermined dimensions. As shown in Fig. 3, a forming punch 6 having a diameter corresponding to the inner diameter of the battery case 1 to be formed is used to extrude the preliminary case 5 thereby, and the preliminary case 5 is allowed to pass through a plurality of forming dies 7a to 7d having gradually decreasing respective inner diameters. The forming punch 6 has a case-forming portion 6a on the front side in the advancing direction and a step portion 6b formed on the rear side in the advancing direction, with the diameter of the step portion 6b being smaller than the diameter of the case-forming portion 6a, as shown in Fig. 3. Therefore, the thickness of the preliminary case 5 having been subjected to ironing using the forming dies 7a to 7d is larger at a position corresponding to the step portion 6b than at a position corresponding to the case-forming portion 6a. In this manner, the battery case 1 is formed such that the thickness of the sealing section 1b is larger than the thickness of circumferential portion 1a as shown in Fig. 1A. The capacity of a battery can be increased by reducing the thickness of the side circumferential portion 1a so as to increase the interior volume for containing a power generation element. Even in such a case, since the sealing section 1b is formed to have a larger thickness, a sufficient sealing strength can be ensured so that a battery having high leakage resistance can be produced.

The closed-end tubular body formed by the DI method has an irregularly shaped end portion on the opening side. Therefore, the closed-end tubular body is cut at a predetermined height from the bottom section, whereby the battery case 1 having predetermined dimensions is obtained as shown in Fig. 1A. In this embodiment, a closed-end cylindrical battery case 1 having an outer diameter of 18 mm and a height of 65 mm was produced. The thickness of the side circumferential portion 1a of the battery case 1 was 0.1 mm, and the thickness of the sealing section 1b was 0.2 mm. In addition, the thickness of the bottom section 1c was 0.3 mm. Accordingly, the thickness of the Fe-Ni diffusion layer 3 formed on the steel plate 2 used as the base material decreases at the same ratio as the wall thickness decrease ratio during the process of forming the battery case 1.

Fig. 1B schematically shows the cross-sectional structure of the battery case 1. As shown in Fig. 1B, the Fe-Ni diffusion layer 3 is formed on the inner surface of the battery case 1 so as to cover the surface of the steel plate 2. Fig. 1C schematically shows the cross-sectional structure of a battery case showing as a conventional technology. This battery case has, on its inner surface, an Fe-Ni alloy layer 23 covering the surface of a steel plate 22, a Ni layer 24, and a Ni-P layer 25 serving as a glossy Ni plating layer. As can be seen by comparison with the battery case according to the conventional technology, it is understood that the battery case 1 of the present embodiment has the corrosion-resistant coating formed using a smaller amount of Ni.

As described above, the battery case 1 is produced by forming the preliminary case 5 using a sheet material and shaping the preliminary case 5 into a predetermined shape with predetermined dimensions using the DI method. Therefore, deformation stress may be applied during drawing and ironing. The same working process is used for the battery case according to the conventional technology. Therefore, the deformation can cause cracks, exfoliations, and the like in the plating layer. If cracks, exfoliations, and the like are formed in the glossy plating layer covering the plating layer, the dissolution of Fe is likely to occur locally through pinholes, cracks, and the like present in the plating layer. However, in the battery case 1 according to the present embodiment, the Fe-Ni diffusion layer 3 is formed integrally with the steel plate 2 used as the base material. Therefore, cracks, exfoliations, and the like are not formed under the deformation during the process for forming the battery case 1.

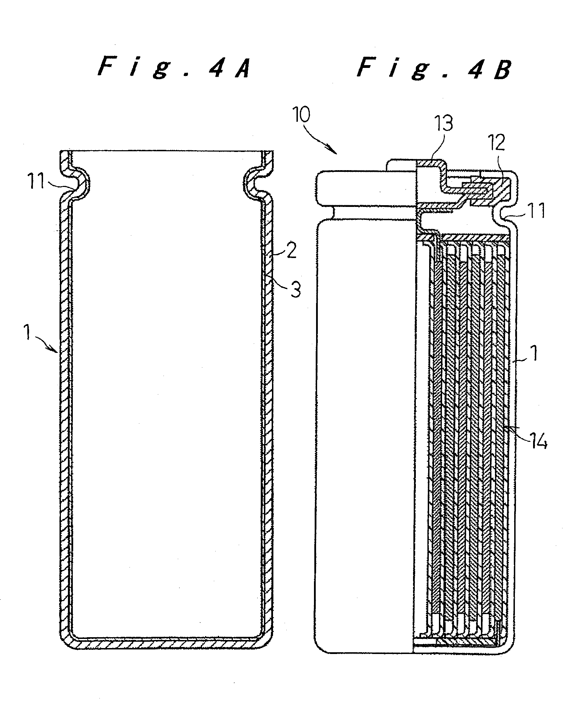

As shown in Fig. 4A, a groove 11 used for closing the opening is formed in the battery case 1 in a step of producing a battery using the battery case 1. As shown in Fig. 4B, the groove 11 is formed after an electrode plate assembly 14 produced by winding positive and negative electrodes with a separator interposed therebetween is contained in the battery case 1. As shown in Fig. 4B, after an electrolyte is fed to the battery case 1, a sealing plate 13 is placed over the groove 11 through a gasket 12. Then, a sealing step (calking process) is performed by bending the opening section inwardly. In the sealing step, the gasket 12 is compressed to secure the sealing plate 13 to the opening section. In this manner, the battery case 1 having the power generation element contained thereinside is manufactured into a battery 10 having a sealed battery case.

During the formation of the groove 11 and the calking process, large deformation stress is applied to the battery case 1. This may cause cracks, exfoliations, and the like in the plating layer of the battery case according to the conventional technology. If cracks, exfoliations, and the like are formed in the glossy plating layer covering the plating layer, the dissolution of Fe is likely to occur locally through pinholes, cracks, and the like present in the plating layer. However, in the battery case 1 according to the present embodiment, the Fe-Ni diffusion layer 3 is formed integrally with the steel plate 2 used as the base material. Therefore, cracks, exfoliations, and the like are not formed under the deformation during the process for producing the battery 10. Fig. 4B shows an exemplary structure of a nickel metal hydride rechargeable battery. However, the structure of a lithium-ion rechargeable battery is substantially the same as the structure shown in Fig. 4B.

### (Production of batteries of Examples and Comparative Examples)

The above-described battery cases 1 were produced using 12 different steel plates 2 (ten different steel plates used in batteries of Examples of the present invention and two different steel plates used in batteries of Comparative Examples). The 12 different steel plates 2 contain different amounts of Fe and have Fe-Ni diffusion layers 3 (thickness: about 1.5 µm) formed thereon and having different Fe/Ni ratios. Ten battery cases 1 were produced for each of the 12 different types. Lithium-ion rechargeable batteries, which are typical non-aqueous electrolyte batteries (Examples 1 to 10 and Comparative Examples 1 and 2), and nickel metal hydride rechargeable batteries which are typical aqueous electrolyte batteries (Examples 11 to 20 and Comparative Examples 3 and 4), were produced using the produced battery cases 1. The lithium-ion rechargeable batteries were examined for corrosion resistance and the occurrence of rust on the steel plates 2, and the nickel metal hydride rechargeable batteries were examined for discharge characteristics and self discharge characteristics.

Each of the batteries 10 was produced as follows. A positive electrode plate and a negative electrode plate were wound into a spiral shape with a separator interposed therebetween to form an electrode plate assembly 14. The formed electrode plate assembly 14 was inserted into the battery case 1, and electrode connections were made. Subsequently, an electrolyte was fed into the battery case 1. A sealing plate 13 was placed in the opening section of the battery case 1 as shown in Fig. 4B, and a calking process was performed by bending the opening section of the battery case 1 inwardly to seal the battery case 1, whereby the battery 10 was completed.

### (Production of the lithium-ion rechargeable batteries)

The positive electrode plate of each lithium-ion rechargeable battery was produced as follows. First, a positive electrode paste was prepared by mixing a positive electrode active material (lithium cobalt oxide), acetylene black, an aqueous dispersion of polytetrafluoroethylene, and an aqueous solution of carboxymethyl cellulose. The prepared positive electrode paste was applied to both sides of an aluminum foil and dried. Subsequently, the dried product was rolled to have a predetermined thickness and cut into strips having predetermined dimensions, and the cut pieces were used as the positive electrode plate.

The negative electrode plate was produced as follows. First, a negative electrode paste was prepared by mixing a negative electrode active material, an aqueous dispersion of styrene-butadiene rubber, and an aqueous solution of carboxymethyl cellulose. The prepared negative electrode paste was applied to both sides of a copper foil and dried. The dried product was rolled to have a predetermined thickness and cut into strips having predetermined dimensions, and the cut pieces were used as the negative electrode plate.

A positive electrode lead and a negative electrode lead were attached to the positive electrode plate and the negative electrode plate, respectively. The positive and negative electrode plates were wound into a spiral shape with a polyethylene-made fine porous separator interposed therebetween to produce an electrode plate assembly 14 having predetermined outer dimensions. The produced electrode plate assembly 14 was contained in the battery case 1. The positive electrode lead was connected to the sealing plate 13, and the negative electrode lead was connected to the battery case 1. An electrolyte prepared by dissolving LiPF₆ in a mixed solvent of ethylene carbonate and ethylene methyl carbonate was fed into the battery case 1. Subsequently, a sealing plate 13 was placed in the opening section of the battery case 1 having a groove 11 formed therein, and a calking process was performed by bending the opening section of the battery case 1 inwardly. In the calking process, the peripheral portion of the sealing plate 13 was pressed through a gasket 12. In this manner, the opening was closed to seal the battery case 1, whereby the lithium-ion rechargeable battery was completed.

### (Examination of corrosion due to over-discharge in lithium-ion rechargeable batteries)

Each of the produced lithium-ion rechargeable batteries including different battery cases 1 was examined for corrosion resistance against corrosion due to over-discharge and the occurrence of rust in the battery case 1. Twelve different lithium-ion rechargeable batteries were prepared to be Examples 1 to 10 and Comparative Examples 1 and 2. The produced lithium-ion rechargeable batteries have different battery case structures, i.e., different Fe-Ni diffusion layers 3 with different Fe/Ni ratios and different steel plates 2 with different Fe contents as shown in Table 1.

The corrosion resistance was evaluated as follows. A 1 kΩ resistor serving as a load was connected between the positive and negative electrodes of the lithium-ion rechargeable battery. This lithium-ion rechargeable battery was left to stand in a high temperature atmosphere of 80°C, and the time until a hole is formed to reach the outer surface of the battery case 1 was measured. When leakage through the hole occurred within a specified period (200 hours), the battery was evaluated as "fail."

The occurrence of rust on the inner surface of the battery case was evaluated by a test method specified in JIS Z 2371. More specifically, the presence or absence of rust was examined at a predetermined time (0.5 hours) after a 5% aqueous NaCl solution was sprayed on the inner surface of the battery case.

**Table 1**

| | Fe/Ni ratio | Iron content (wt%) | Corrosion resistance | Rust on inner surface of battery case |
|---|---|---|---|---|
| Example 1 | 0.1 | 99 | ○ | ○ |
| Example 2 | 0.3 | 99 | ⊚ | ○ |
| Example 3 | 0.5 | 98 | ⊚ | ○ |
| Example 4 | 0.5 | 97 | × | ○ |
| Example 5 | 0.5 | 96 | × | ○ |
| Example 6 | 0.5 | 84 | × | ○ |
| Example 7 | 1.0 | 99 | ⊚ | ○ |
| Example 8 | 1.5 | 99 | ⊚ | ○ |
| Example 9 | 2.0 | 99 | ⊚ | ○ |
| Example 10 | 2.5 | 99 | ⊚ | ○ |
| Comparative Example 1 | 0.05 | 99 | × | ○ |
| Comparative Example 2 | 3.0 | 99 | ⊚ | × |

As shown in Table 1, in the batteries formed using the battery cases including the Fe-Ni diffusion layers 3 having Fe/Ni ratios of 0.1 to 2.5, only a small amount of rust was formed, and the results were favorable. When the Fe content in the steel plate 2 was 98 percent by weight or more, the produced battery was also excellent in corrosion resistance. The results showed that, when the Fe/Ni ratio was less than 0.1, the corrosion resistance was not satisfactory. When the Fe/Ni ratio was greater than 2.5, the evaluation results for rust formation were unsatisfactory. Even when the Fe/Ni ratio was in the range of 0.1 to 2.5, the corrosion resistance was not satisfactory when the Fe content in the steel plate 2 was less than 98 percent by weight. This may be because of the following. When the carbon content in the steel plate 2 is small, the corrosion resistance is high. Therefore, the dissolution of Fe in the electrolyte is suppressed. However, when the Fe content in the steel plate 2 is less than 98 percent by weight, the carbon content is increased, and therefore the corrosion resistance is reduced.

When the evaluation results for the formation of rust on the inner surface of the case are poor, rust may be formed on the inner surface of the case during the storage of the case. If a battery is assembled using the case having rust on the inner surface, the rust may cause voltage failure and gas generation failure. Therefore, the Fe/Ni ratio is preferably 2.5 or less.

### (Production of the nickel metal hydride rechargeable batteries)

The positive electrode plate of each nickel metal hydride rechargeable battery was produced as follows. First, 10 parts by weight of cobalt hydroxide was added to 100 parts by weight of nickel hydroxide containing Co and Zn serving as a positive electrode active material. Water and a binging agent were added to the prepared mixture, and the resultant mixture was stirred. The mixture was filled into fine pores of a foamed nickel sheet having a thickness of 1.2 mm. The nickel sheet was dried, rolled to have a predetermined thickness, and cut into strips having predetermined dimensions, and the cut pieces were used as the positive electrode plate.

The negative electrode plate was produced as follows. A known AB₅ type hydrogen-absorption alloy was pulverized to have an average particle size of 35 µm, and water and a binding agent was added to the alkali-treated alloy powder, and the mixture was stirred. The resultant mixture was applied to a punched metal plated with Ni. The product was dried, rolled to have a predetermined thickness, and cut into strips having predetermined dimensions, and the cut pieces were used as the positive electrode.

A positive electrode lead and a negative electrode lead were attached to the positive electrode plate and the negative electrode plate, respectively. The positive and negative electrode plates were wound into a spiral shape with a 150 µm thick hydrophilic nonwoven fabric-made separator interposed therebetween to produce an electrode plate assembly 14. The negative electrode lead of the electrode plate assembly 14 was connected to the battery case 1, and the positive electrode lead was connected to the sealing plate 13. The electrode plate assembly 14 was contained in the battery case 1 with insulating plates placed on the upper and lower sides of the electrode plate assembly 14. An aqueous potassium hydroxide solution of a specific gravity of 1.3 g/mL serving as an electrolyte was fed into the battery case 1 containing the electrode plate assembly 14. A sealing plate 13 was placed in the opening section of the battery case 1 through a gasket 12, and the sealing plate 13 was placed in the opening section of the battery case 1 having a groove 11 formed therein. A calking process was performed by bending the opening section of the battery case 1 inwardly. In the calking process, the gasket 12 was compressed, whereby the sealing plates 13 were attached to the opening section. In this manner, the opening of the battery case 1 was sealed, and the nickel metal hydride rechargeable battery including the sealed battery case 1 was completed.

### (Examination of discharge characteristics and self discharge characteristics of the nickel metal hydride rechargeable batteries)

Each of the produced nickel metal hydride rechargeable batteries including different battery cases 1 was examined for discharge characteristics and self discharge characteristics. Twelve different nickel metal hydride rechargeable batteries were prepared to be Examples 11 to 20 and Comparative Examples 3 and 4. The produced nickel metal hydride rechargeable batteries have different battery case 1 structures, i.e., different Fe-Ni diffusion layers 3 with different Fe/Ni ratios and different steel plates 2 with different Fe contents as shown in Table 2.

The discharge characteristics were examined as follows. The following charge-discharge cycle was repeated. The battery was charged using a charge current of 300 mA for 12 hours, followed by a rest period of 1 hour. Then, the battery was discharged using a discharge current of 600 mA until the voltage reached a discharge termination voltage (1 V), followed by a rest period of 1 hour. Subsequently, the battery was again charged. The discharge characteristics are represented by a relative measure defined as a percentage ratio of the number of cycles until the discharge capacity reaches 70% of an initial capacity (the discharge capacity after three cycles) to a predetermined number of cycles (500 cycles).

The self discharge characteristics were examined as follows. The battery was left to stand in an atmosphere at a temperature of 45°C for a predetermined period (2 weeks). Then, the discharge capacity was measured and compared with the initial discharge capacity. When the ratio of the discharge capacity retained after self discharge was equal to or less than a predetermined value (60%), the battery was evaluated as "fail."

**Table 2**

| | Fe/Ni ratio | Iron content (wt%) | Discharge characteristics (relative measure) | Self discharge characteristics |
|---|---|---|---|---|
| Example 11 | 0.1 | 99 | 104 | ○ |
| Example 12 | 0.3 | 99 | 107 | ○ |
| Example 13 | 0.5 | 98 | 102 | ○ |
| Example 14 | 0.5 | 97 | 99 | ○ |
| Example 15 | 0.5 | 96 | 98 | ○ |
| Example 16 | 0.5 | 84 | 95 | ○ |
| Example 17 | 1.0 | 99 | 115 | ○ |
| Example 18 | 1.5 | 99 | 117 | ○ |
| Example 19 | 2.0 | 99 | 118 | ○ |
| Example 20 | 2.5 | 99 | 111 | ○ |
| Comparative Example 3 | 0.05 | 99 | 100 | ○ |
| Comparative Example 4 | 3.0 | 99 | 112 | × |

As shown in Table 2, when the Fe content of the steel plate forming the battery case 1 was less than 98 percent by weight, the relative measure for the discharge characteristics was 100 or less. This may be due to the influence of the carbon content in the steel plate on the corrosion resistance. More specifically, when the carbon content is low, the corrosion resistance is improved, so that the dissolution of Fe in the steel plate into the electrolyte is suppressed. When the carbon content is high, i.e., the Fe content is low, Fe in the steel plate dissolves in the electrolyte, and the dissolved Fe ions may inhibit the electrochemical reaction at the boundary between the electrode plate and the electrolyte.

The results of the self discharge characteristics were good for most of the batteries. However, in Comparative Example 4, the Fe/Ni ratio of the battery case 1 constituting the battery was 3.0. Therefore, the obtained self discharge characteristics were not satisfactory. This may be because the amount of dissolved Fe was large.

In the above-described Examples, the battery case 1 was used for lithium-ion rechargeable batteries and nickel metal hydride batteries. In alkaline manganese dry batteries, nickel manganese batteries, and nickel cadmium rechargeable batteries, the aqueous electrolyte used is an aqueous potassium hydroxide solution as in nickel metal hydride rechargeable batteries. Therefore, when the battery case 1 of the present invention is used for such batteries, good corrosion resistance is obtained.

Since alkaline manganese dry batteries and nickel manganese dry batteries are configured such that the battery case 1 serves as the positive terminal, a positive electrode protrusion must be formed on the bottom of the battery case 1. Therefore, the number of processing steps of the battery case 1 increases, and the number of deformed areas increases. However, cracks and exfoliations are not formed in the Fe-Ni diffusion layer 3 by drawing and the like, so that the corrosion resistance can be maintained. Moreover, when the battery installed in a device is left to stand for a long time or when the battery is left to stand in a continuously discharged state, corrosion due to over-discharge may occur as the battery voltage decreases. Even in such a case, the dissolution of Fe does not occur locally but gradually proceeds in a global manner, and this is effective for preventing leakage.

### INDUSTRIAL APPLICABILITY

As described above, in the present invention, the battery case has an Fe-Ni diffusion layer on its inner surface in contact with the electrolyte, and the Fe/Ni ratio in the Fe-Ni diffusion layer is adjusted within a predetermined range. Therefore, pinholes, cracks, and the like are not formed in the working steps for forming the battery case and in the working steps for producing a battery, and the dissolution of Fe does not occur locally. Even when the dissolution of Fe is caused due to over-discharge, the dissolution gradually proceeds in a global manner so that the formation of a through hole in the battery case caused by the dissolution of Fe can be prevented. A battery using the battery case is excellent in leakage resistance and uses a small amount of Ni. Therefore, a high performance battery can be provided at low cost.

## Claims

1. A battery case (1) comprising a base material including a steel plate (2) and an iron-nickel diffusion layer (3) formed on one surface of the steel plate, the battery case being formed by shaping the base material into a closed-end tubular shape with predetermined dimensions such that the one surface faces inward, wherein
the iron-nickel diffusion layer (3) is formed such that an iron/nickel ratio is 0.1 to 2.5 at a depth giving a maximum of a nickel intensity when the iron-nickel diffusion layer (3) is subjected to glow discharge optical emission spectroscopic analysis to measure the nickel intensity and an iron intensity in a depth direction, the iron/nickel ratio being a ratio of the iron intensity to the maximum value of the nickel intensity.

2. The battery case according to claim 1, wherein the iron-nickel diffusion layer (3) has a thickness of 0.1 to 4.0 µm.

3. The battery case according to claim 1 or 2, wherein the steel plate (2) contains iron in an amount of 98 percent by weight or more.

4. A battery (10) comprising a battery case (1) including a base material including a steel plate (2) and an iron-nickel diffusion layer (3) formed on one surface of the steel plate, the battery case being formed by shaping the base material into a closed-end tubular shape with predetermined dimensions such that the one surface faces inward, wherein:
the steel plate (2) of the base material contains iron in an amount of 98 percent by weight or more; the iron-nickel diffusion layer (3) is formed such that an iron/nickel ratio is 0.1 to 2.5 at a depth giving a maximum of a nickel intensity when the iron-nickel diffusion layer (3) is subjected to glow discharge optical emission spectroscopic analysis to measure the nickel intensity and an iron intensity in a depth direction, the iron/nickel ratio being a ratio of the iron intensity to the maximum value of the nickel intensity; and the battery case (1) formed by shaping the base material into the predetermined shape with the predetermined dimensions is allowed to contain a power generation element therein, the battery case having an opening that is closed to seal an inner portion of the battery case (1).

5. The battery according to claim 4, being an alkaline battery including a power generation element contained in the battery case (1), and wherein the power generation element is composed of a positive electrode including, as an active material, at least one of manganese dioxide and oxy nickel hydroxide, a zinc negative electrode, a separator interposed therebetween, and an alkaline electrolyte with which the power generation element is filled.

6. The battery according to claim 4, being an alkaline rechargeable battery including a power generation element contained in the battery case (1), and wherein the power generation element is composed of a positive electrode including nickel hydroxide as an active material, a negative electrode, a separator interposed therebetween, and an alkaline electrolyte with which the power generation element is filled.

7. The battery according to claim 4, being a non-aqueous electrolyte rechargeable battery including a power generation element contained in the battery case (1), and wherein the power generation element is composed of a positive electrode, a negative electrode, a separator interposed therebetween, and a non-aqueous electrolyte with which the power generation element is filled.
